# EUROPEAN PATENT SPECIFICATION

(11) **EP 4 353 462 B1**
(45) Date of publication and mention of the grant of the patent: **21.01.2026**
(21) Application number: 22306561.6
(22) Date of filing: 14.10.2022
(51) Int. Cl.: B29D 11/00

(54) **METHOD OF MANUFACTURING A LENS**
VERFAHREN ZUR HERSTELLUNG EINER LINSE
PROCÉDÉ DE FABRICATION D'UNE LENTILLE

(43) Date of publication of application: 17.04.2024
(73) Proprietor: Essilor International, 94220 Charenton-Le-Pont (FR)
(72) Inventor: MCDERMOTT, Shawn, Dallas 75234 (US); BERSHEFSKY, Joe, Dallas 13455 (US)
(74) Representative: Plasseraud IP

(56) References cited:
- EP-A1- 2 168 757
- JP-A- H07 108 622
- US-A- 4 036 624
- US-A- 4 822 397
- US-A1- 2018 052 328
- US-A1- 2020 116 979
- US-A1- 2020 207 947

## Description

### Technical field

This invention relates to a method of manufacturing a lens such that during the manufacturing process, internal stress of the lens is minimized, birefringence is reduced, and optical stability is maintained.

### Background information and prior art

The process of manufacturing ophthalmic lenses usually begins with an unfinished or semi-finished glass or plastic lens blank. As the manufacturing process proceeds, the blank is edged and shaped into a lens. The lens may be coated and then cured in an oven at predetermined parameters, such as a predetermined temperature(s) and duration. Typical parameters at which such lenses are manufactured can cause the optical quality of the lenses to be compromised. For instance, the lenses may develop optical instabilities and undesirable internal pressures that can compromise the fidelity of the lens structure. The methods of forming and cooling the lens blanks described in the art can result in the presence within the ophthalmic lenses of high internal stresses likely to compromise their optical qualities.

Accordingly, there is a need for an improved lens manufacturing process such that the optimal characteristics of the lens are not compromised, including the internal pressure, optical quality, and other characteristics.

What is provided herein is a process of forming semi-finished or finished ophthalmic lenses that involves injection molding, followed by annealing, using a unique set of parameters to achieve unexpected results of lenses having substantially no defects in optical quality, free from any internal stresses at ambient temperature, and without requiring excessive resources. Preferably, the lens formed by the method of the invention is a spectacle lens, more preferably a semi-finished lens. However, the method described herein can be used to produce any finished product that requires tight optical tolerances and low stress.

The improved manufacturing process described herein includes manufacturing a lens at a unique combined set of parameters in order to maintain optimal optical and non-optical lens characteristics, including optical stability and appropriate internal pressure. The improved process described herein is applicable for manufacturing a semi-finished injection molded single vision polycarbonate lens. However, this process can also be applied to other types of lens materials in which annealing is used, to improve the quality of the lens during the manufacturing process. Further, this method can be applied to any other product that requires bonding to an Rx lens blank, such as, but not limited to, products used for sun wear, virtual reality, and augmented reality, or electrochromic lens products and/or for any other product for which annealing might provide an improvement in optical quality. The method described herein allows for improved downstream manufacturing processes, including surfacing and bonding of the lenses that occur after injection molding and annealing of a lens. Because this method allows for a more consistent quality lens, it also allows for consistent bonding between Rx blanks and electrochromic cells, for example. A lens produced by the process described herein has improved optical stability, reduced birefringence, reduced residual stress, and reduced warpage, among other improved characteristics.

Document US 2020/0116979 A1 discloses a method of manufacturing a lens, comprising providing a lens and placing it in a heating apparatus comprising a cavity and annealing the lens.

### Summary

What is provided herein is a method of manufacturing an optical article, comprising: providing at least one lens blank; providing a heating apparatus, wherein the heating apparatus comprises a cavity defined by an internal surface, wherein the cavity has a first temperature; positioning the at least one lens blank inside of the heating apparatus; substantially entirely sealing the heating apparatus; annealing the at least one lens blank in the heating apparatus for between 3 hours and 28 hours, wherein the annealing comprises: adjusting the first temperature to a second temperature for between 1 hours and 8 hours; heating the at least one lens blank in the heating apparatus for between 1 hour and 12 hours; adjusting the second temperature to the first temperature for between 1 and 8 hours; unsealing the heating apparatus; and removing the annealed at least one lens blank from the apparatus.

Also provided herein is an optical article, wherein the optical article comprises: an annealed semi-finished lens, wherein the annealed semi-finished lens is annealed by a) heating the lens at an increasing temperature from about 30 ºC to about 140 ºC for between 1 and 8 hours; b) heating the lens at about 140 ºC for between 1 hour and 12 hours, and c) heating the lens at a decreasing temperature from about 140 ºC to about 30 ºC for between 1 hour and 8 hours.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 is a perspective view of a blank which may be used in the method described herein.
Figure 2 is a schematic diagram of an exemplary embodiment of an injection molding apparatus.
Figure 3 is a diagrammatic view in elevation of an oven that can be used in the method described herein.
Figure 4 represents several images of lens blanks after they have been annealed using the process described herein.
Figure 5 illustrates optical data from lenses having a base curve of 6 that have been treated using the method described herein.

### Detailed description of embodiments

In the description which follows, the drawing figures are not necessarily to scale, and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

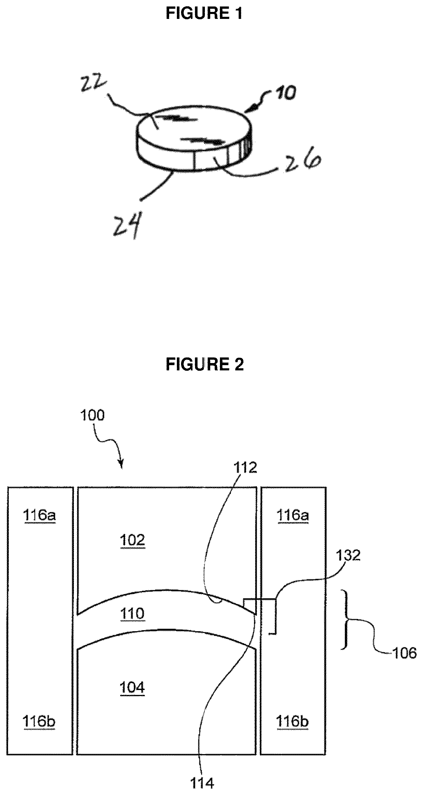

An optical lens is generally manufactured from an optical lens blank that is provided, such as a semi-finished lens blank. "Lens blanks" are defined here as a block of material, such as transparent plastic or glass, that is to be machined so as to obtain an optical lens. As used herein, the term "lens" means an optical grade article. The term includes plano lenses as well as powered lenses. Figure 1 illustrates an example of a lens blank 10 of synthetic material, of polycarbonate, for example. The blank 10 may be obtained, as known in the art, by cutting it out from a plate, by stamping for example, or by cutting a rod. Further, instead of being simply cut out of a plate, and therefore having parallel planar faces as illustrated, the starting lens blank may be pre-formed in order to facilitate the forming method disclosed herein. The lens blank may be made available in standard diameters, for example 76 mm, and 9 mm in thickness.

In the embodiment shown in Figure 1, the lens blank 10 has a circular peripheral contour. The semi-finished lens blank 10 generally has two opposite surfaces, at least one of which is unfinished: a first blank surface 22 and a second blank surface 24 opposed to the front surface 22. The lens blank 10 further comprises a peripheral blank surface 26 linking the first and second blank surfaces. The unfinished surface of the lens blank is machined according to the wearer's prescription to provide the required surface of the optical lens. According to further manufacturing processes, an optical lens may be obtained by machining both surfaces of an optical lens blank. An optical lens having finished front and back surfaces is often referred to as an uncut optical lens. The lens blank 10 is edged along a line according to a shape of a spectacle frame of the optical lens in order to obtain an edged or cut optical lens. Suitable lens types are selected from ophthalmic lenses which may be afocal, single vision, semi-finished, sunglass, plano, unifocal, multi-focal, bifocal, bifocal straight top, trifocal, trifocal straight top, PAL, or a progressive lens. The preferred lens type is a semi-finished lens. Optical lenses are manufactured in various powers.

For the process described herein, polycarbonate ophthalmic lenses are injection molded. By "ophthalmic lens" is meant a contact lens, intraocular lens, spectacle lens and the like. The injection molding process is described in U.S. Patent No. 7,922,942, incorporated herein by reference. Injection molding enables raw plastics material to be transformed directly into finished lenses. In manufacturing lenses, and particularly lenses for eyeglasses, the use of plastics, particularly thermoplastics, is often desirable due to their light weight and durability. Plastic lenses also provide relatively economic vision correction. Methods for producing plastic lenses of various prescriptions are well known.

In the manufacture of lenses using injection molding, it is conventional for the thermoplastic material to be initially heated so as to be molten at a temperature above the vitreous transition point. While in this form, the lens material is introduced under high pressure into a mold cavity of appropriate dimensions and shape that is formed in a mold. The material is then allowed to cool down so as to solidify, after which the resulting lens is extracted from the mold. Usually, the material used is a thermoplastic resin such as polymethyl methacrylate, polycarbonate, or a copolymer of polycarbonate, polynorbornene, polystyrene, cyclic polyolefins and their copolymers, etc. By "thermoplastic" is meant an optically clear thermoplastic of optical grade. By "resin" is meant at least one monofunctional monomer, one or more polyfunctional monomers, and one or more initiators. Thermoplastics that may be used include, by way of example only, polycarbonates, polycarbonate/copolyester blends, diethylene glycol bis(allylcarbonate), acrylics like PMMA, cyclic olefin copolymers, amorphous polyamides, polyesters, copolyesters, polyurethanes, polyamide, polyimide, polysulfone, copolymers of polyethyleneterephthalate and polycarbonate, polyolefine, homopolymers and copolymers of diethylene glycol bis(allylcarbonate), homopolymers and copolymers of (meth)acrylic monomers, homopolymers and copolymers of thio(meth)acrylic monomers, homopolymers and copolymers of urethane, homopolymers and copolymers of thiourethane, epoxy homopolymers and copolymers, and episulfure homopolymers and copolymers. In a preferred embodiment the lens material is polycarbonate.

As illustrated in Figure 2, an embodiment of an injection molding machine 100 or "mold assembly" that can be used to manufacture lenses is illustrated. By "mold assembly" is meant one or more mold halves. Lens molding cavity 110 is provided to form optical lens 10. A removable concave insert 102 includes a part-forming surface 112 that forms a convex lens surface. A further removable convex insert 104 is also provided. Receiver rings 116a and 116b surround the inserts and form a lens side surface. The receiver rings meet along a parting line 106.

At the beginning of the injection molding cycle, the mold is closed and a lens is injection molded within the cavity. A removable concave insert 102 has a part-forming surface 112 bounded by a perimeter edge 114. A receiver ring surrounds the insert and meets the perimeter edge in an annular contact region 132.

In one embodiment, the injection molding may be carried out at a mold temperature of between 260° F and 510° F, show size of 3.00 inches, an injection speed of 0.1 inch/s, packing pressure of 800 psi, hold time of 100 seconds, cooling time of 4 minutes, and a primary clamping force of 150 tons. At the end of the cooling cycle, the mold can be opened to expose the convex surfaces of the just molded lenses. The lens may be selected from various base curves and various lens types.

The mold utilized has a desired curvature for the front surface of the lens. The resin is placed into the mold, and the lens blank having been molded by an injection molding process is then pressed against and into the mold and permitted to rest on the resins such that the resin is drawn throughout the cavity between the mold surface and the lens surface. Once in this position, the system is then cured until the resin is sufficiently hardened. Then the lens blank is removed with the resin being cured onto the surface, having an outer surface corresponding to the curvature of the mold. Typically the front portion of the lens that is produced can have a surface with a known power or curvature, with the rear surface being in blank or not of ophthalmic quality.

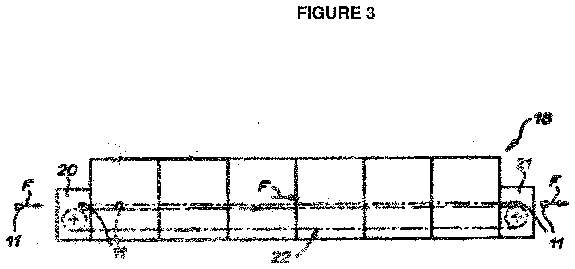

Although Figure 1 illustrates a single lens blank to be used in the process described herein, a plurality of lens blanks 10 may also be used. The at least one lens blank 10 is placed inside of an oven for annealing. The annealing process described herein can be used for semi-finished (SF) Rx lenses. In the embodiment shown in Figure 3, the oven 18 can be a tunnel oven which has a loading area 20 at its inlet end and an offloading area 21 at its outlet end. Between these inlet and outlet areas is a cavity into which the at least one lens blank 10 is positioned such that the at least one lens blank is positioned in a non-contacting relationship with the internal surface of the cavity. The oven 18 is configured to be completely sealed using a door (not shown) once the lens blanks 10 are positioned inside of the cavity. In one embodiment, the oven 18 may comprise further separate heating areas inside the cavity, wherein the temperature in each of the heating areas of the cavity may be appropriately adjusted throughout the process, as needed. The temperature may be adjusted manually or may be adjustable via a programmable feature. In another embodiment, a programmable oven might be used in place of the tunnel oven for carrying out the forming and annealing steps of the process. In one embodiment, the lens blanks 10 may be positioned on a tree (not shown) in pairs loaded upright in coating trays which are then positioned into the oven. The lenses are positioned such that they do not come into contact with any part of the oven interior surface or with each other. In a preferred embodiment the oven 18 must be accurate to +/- 1 ºC. Once the oven door is closed, it cannot be opened again until the procedure is complete. This is necessary to prevent over compensation of heat loss if the lenses within the oven cavity are exposed to ambient air temperature.

In one embodiment the oven 18 further comprises a conveyor 22 for passing molds 11, each containing at least one lens blank 10 from its inlet end to its outlet end, as schematically represented by arrows F in Figure 3. The linear speed of conveyor 22 may be 8 cm/min. During the annealing steps described herein, the conveyor 22 is stationary. In one embodiment, the temperature in the cavity can be adjusted to a value that exceeds the vitreous or glass transition temperature of the synthetic material of which the blank 10 is made. The temperature in the cavity can be independently adjusted and monitored during the annealing process.

Lens blanks 10 that are used herein may have a lens geometry that is defined by a concentric curve (i.e., 6.75 diopters = 86.800 mm concave and 86.800 mm convex), thus resulting in a substantially equal thickness throughout the entire lens. In addition to the annealing process, this geometric profile is beneficial for preventing uneven stress development throughout the lens during the manufacturing process. The concentric curvature of the lens and annealing of the lens allow for better downstream assembly of the completed ophthalmic lens product, including surfacing and bonding processes that occur after injection molding and annealing. The critical process steps and parameter combinations described herein also enable the bonding process to occur more smoothly, thereby enabling higher volume lens yields. The minimized residual stresses of the lenses produced herein may also have a better chemical resistance to any adhesives used during the bonding step of the process. In turn, this allows for a wider range of adhesive options to be used in future bonding processes for the lenses.

The manufacturing process disclosed herein uses higher temperatures and different combinations of temperature durations for each step compared to existing lens manufacturing processes. The annealing process involves providing at least one lens blank; providing a heating apparatus, wherein the heating apparatus comprises a cavity defined by an internal surface, wherein the cavity has a first temperature; positioning the at least one lens blank inside of the heating apparatus; substantially entirely sealing the heating apparatus; annealing the at least one lens blank in the heating apparatus for between 3 hours and 28 hours, or between 3 hours and 20 hours, or between 3 hours and 16 hours, or between 3 hours and 12 hours, or more preferably, between 3 hours and 8 hours.

In particular, the annealing step comprises: a) adjusting the first temperature to a second temperature for between 1 hour and 8 hours, or between 1 hour and 6 hours, or more preferably between 1 hour and 4 hours; b) heating the at least one lens blank in the heating apparatus for between 1 hour and 12 hours, or between 2 hours and 10 hours, or between 2 hours and 8 hours, or between 2 hours and 6 hours, and more preferably between 2 hours and 4 hours; and c) adjusting the second temperature to the first temperature for between 1 hour and 8 hours, or between 2 hours and 6 hours, or more preferably between 2 hours and 4 hours; unsealing the heating apparatus; and removing the annealed at least one lens blank from the apparatus.

More particularly, the step of adjusting the first temperature further comprises adjusting the temperature from about 30 ºC to about 140 ºC. The step of adjusting the second temperature further comprises adjusting the second temperature from about 140 ºC to about 30 ºC. The step of heating the lens blank at about 140 ºC comprises heating the lens blank for about 2 hours.

In particular, the annealing process involves a) adjusting the first temperature starting at 30 ºC to a second temperature of 140 ºC for 2 hours; b) heating the at least one lens blank in the heating apparatus at a temperature of 140 ºC for 2 hours, and c) adjusting the temperature from 140 ºC to 30 ºC for 4 hours. The total time for the annealing process is a total of 8 hours.

The step of providing the at least one lens blank further comprises providing at least one polycarbonate lens blank, and the step of providing the at least one lens blank further comprises providing a lens blank, wherein the lens blank has a substantially equal thickness throughout substantially the entire lens blank.

For the method described herein, the optical article is selected from the group comprising: an ophthalmic device, an ophthalmic lens, a finished lens, a semi-finished (SF) lens, and an optical display.

In one aspect, following the annealing step, the process further includes at least one of: finishing the lens, applying a hard coat layer to at least a portion of the at least one lens blank, and edging the optical article. Thus, the method described herein comprises an optical article manufactured according to the process described above.

The invention also comprises herein an optical article, wherein the optical article comprises: an annealed semi-finished lens, wherein the annealed semi-finished lens is annealed by a) heating the lens at an increasing temperature from about 30 ºC to about 140 ºC for between 1 hours and 8 hours; b) heating the lens at about 140 ºC for between 1 hour and 12 hours, and c) heating the lens at a decreasing temperature from about 140 ºC to about 30 ºC for between 1 hour and 8 hours. In particular, the lens is annealed by a) heating the lens at an increasing temperature from about 30 ºC to about 140 ºC for 2 hours; b) heating the lens at about 140 ºC for about 2 hours, and c) heating the lens at a decreasing temperature from about 140 ºC to about 30 ºC for 4 hours.

Table 1 below depicts the effect of various annealing temperatures on the optical quality of the lenses produced. As seen, even a few degrees can potentially result in a lens that is not within optimal optical specifications. Such shifts can be due to minor perturbations, such as, but not limited to the oven door being opened during the process.

**Table 1 6B Optics Evolution Annealing**

| | 1 | 2 | 3 | 4 | 5 | 6 | 7 | 8 |
|---|---|---|---|---|---|---|---|---|
| | Temperature (ºC) | Base curve | Power | FVR1 (mm) | FVR2 (mm) | FV B.C. | FV | FV Cycl. |
| | | | | | | | +/- 0.06 | +/- 0.06 |
| A | 160 | 6 | 6.751 | 90.8 | 90.02 | 6.482 | -0.27 | 0.10 |
| B | 160 | 6 | 6.751 | 91.26 | 88.83 | 6.509 | -0.24 | 0.30 |
| C | 150 | 6 | 6.751 | 87.44 | 86.23 | 6.749 | 0 | 0.16 |
| D | 150 | 6 | 6.751 | 87.83 | 86.15 | 6.748 | 0 | 0.18 |
| E | 145 | 6 | 6.751 | 87.61 | 86.82 | 6.719 | -0.03 | 0.10 |
| F | 145 | 6 | 6.751 | 87.68 | 87.3 | 6.698 | -0.05 | 0.05 |
| G | 144 | 6 | 6.753 | 87.59 | 86.88 | 6.718 | -0.04 | 0.05 |
| H | 144 | 6 | 6.75 | 87.47 | 86.67 | 6.73 | -0.02 | 0.06 |
| I | 140 | 6 | 6.753 | 87.02 | 86.75 | 6.745 | -0.01 | 0.02 |
| J | 140 | 6 | 6.753 | 86.78 | 86.63 | 6.759 | -0.01 | 0.01 |

In the first column of Table 1, the temperature at which each lens sample was annealed is listed. Each temperature listed is a peak temperature during a selected phase of the annealing process. The annealing process temperatures ranged from 140 ºC to 160 ºC.

Annealing was completed for semi-finished single vision (SFSV) lenses having a profile of 76 mm, at 2, 4, 6, and 8 base curves. However, as noted in column 2, only those polycarbonate lenses having a base curve of 6 were included in the test data described above. In the above experiments, up to 120 lens blanks 10 at a time could be annealed in the oven 18. However, if a larger oven were to be used, for example, more lenses could be simultaneously annealed. The oven 18 may be sized appropriately, based on the target volume of lenses to be annealed. Thus, the step of positioning the at least one lens blank inside the heating apparatus comprises positioning a plurality of lens blanks in the cavity.

Column 3 describes the power of the lenses, in diopters, before annealing. Columns 4 and 5 describe the far vision radius 1 (FVR1) and the far vision radius 2 (FVR2). The insert radii was 86.780 mm. Lenses having as close to this target radii as possible were considered to be closer to ideal optical quality.

Column 6 describes the far vision actual reading in diopters (FV B.C.) after annealing. Column 7 illustrates the far vision deviation in diopters (FV Deviation). Column 8 illustrates the differential between columns 4 and 5 or the far vision cylinder power (FV Cycl.). As seen in Columns A6 through A8, B6 through B8, and C8, D8, and E8, the deviation in the optimal optical quality is outside of what is considered optically acceptable. In contrast, the annealing data in C7 through J7 and F8 through J8 is considered more ideal, or closer to optimal optical quality. The annealing data in row J is considered most optimal because it is closest to optimal optical characteristics and is within the target standard deviation of +/- 0.06.

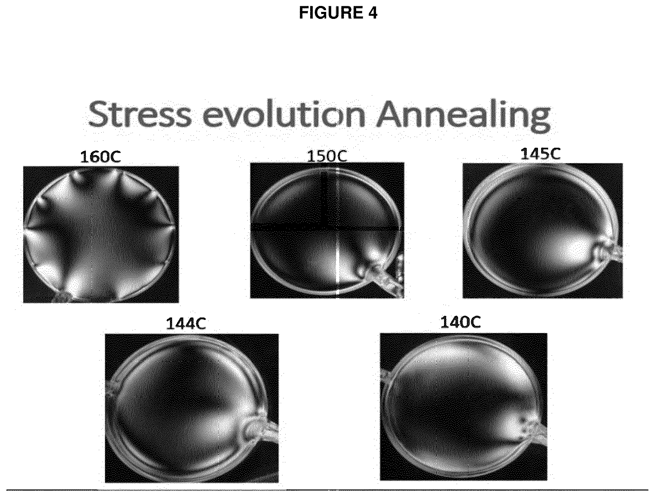

Figure 4 is a series of images of the lens blanks 10 after annealing the lens blanks 10 at various temperatures ranging from about 140 ºC to about 160 ºC. Although the lens blanks 10 that were annealed at 145 ºC and 150 ºC, respectively, may appear to have fewer stress indicators, post-annealing, compared to the lenses that were annealed at other temperatures, Table 1 illustrates that the optical stability of the lens blanks 10 that were annealed at these temperatures did not meet standard optimum lens quality criteria. For concentrically curved lens blanks, such as those used in the annealing experiments described above, the temperature and duration parameters (such as those described in Table 1) used for the annealing steps allowed the lenses to tolerate a diopter shift of 0.02 at least 95% of the time, without compromising the optical quality of the lenses. By "concentrically curved" lenses, it is meant those where the convex surface and concave surface are substantially identical, and the center and edge thicknesses of the lenses are substantially identical. In the first image labeled "160 C," this lens was annealed at a temperature of 160 ºC. During the heating of this lens, at least a portion of the lens was in contact with the cavity of the lens during the annealing process. Because of this contacting relationship, defects in the lens resulted, as shown by indentations at different points just inside the perimeter of the lens. While the lenses labeled "150 C," "145 C," and "144 C," did not have similar defects as the "160 C" lens, these lenses also did not have optimum optical measurements, in comparison with the other lenses. The lenses labeled "160 C," "150 C," and "145 C" were annealed at temperatures above the glass transition temperature. These final lens products did not produce optimal optical quality lens products. The lens labeled "140 C" and annealed at such a temperature had the most optimal optical characteristics compared to the other lenses that were annealed in Table 1.

Tables 2 and 3 show replication of a polycarbonate lens to the exact insert specifications used for the annealing process. The insert had a radii of 86.800 mm. All inserts were measured before the annealing process was started, in order to ensure a substantially perfect curve result. Products with high tolerancing specifications (i.e., +/-0.09 diopter) were avoided. This was also done in order to trace back any quality issues during the bonding phase of the process and to assist in identifying the relevant insert. This table illustrates how close the replication was to the standard.

**Table 2**

| 6.00 Base Insert (design -86.800 mm) | | | |
|---|---|---|---|
| Cav # (cavity location) | Ins ID# (ID for inserts) | Radii (mm) | Diopter |
| 1 | EC1 | 86.800 | 6.751 |
| 2 | EC2 | 86.800 | 6.751 |
| 3 | EC3 | 86.800 | 6.751 |
| 4 | EC4 | 86.800 | 6.751 |

**Table 3**

| DLM -6.00 base SF lens (Index 1.586) | | | | | | |
|---|---|---|---|---|---|---|
| Cav # (cavity location) | Radii (ave 1 p/hr) | Range (mm) | Tol (mm) +/-0.78 | DPT (ave 1 p/hr) (diopter) | Range (dpt) | Tolerance (diopter) +/- 0.06 |
| 1 | 86.841 | 86.686-86.944 | 86.02-87.58 | 6.75 | 6.74-6.76 | 6.69-6.81 |
| 2 | 86.847 | 86.686-87.073 | 86.02-87.58 | 6.75 | 6.73-6.76 | 6.69-6.81 |
| 3 | 86.808 | 86.686-86.944 | 86.02-87.58 | 6.75 | 6.74-6.76 | 6.69-6.81 |
| 4 | 86.847 | 86.686-86.944 | 86.02-87.58 | 6.75 | 6.74-6.76 | 6.69-6.81 |
| | 86.841 | | | 6.75 | | |

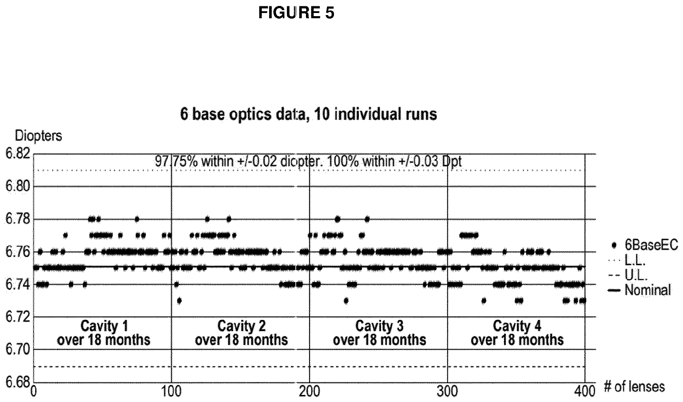

Figure 5 is a graph of optical stability results of lenses using a proprietary A&R Duel Lens mapping system. Lenses were molded on ten different batch runs, spanning for 18 months. Each run produced between 600 and 1,000 lenses. Lens samples were taken from each of the batch runs once per hour during the automated process. One lens sample per cavity, per hour, was tested. Four hundred (400) data points of the produced lenses were collected. Of these 400 lens data points, only 2.25% of the lenses were found to be outside of the +/- 0.02 diopters.

After annealing, the at least one lens blank 10 was manually released from the oven 18. However, in another embodiment, the lens blanks 10 could also be released via an automated, programmable mechanism. The released blanks 10 constituted semi-finished lenses. The annealing method described herein could also be used to produce finished lenses.

After injection molding, annealing, and release of the at least one lens blank 10, surfacing and bonding of the lens may be performed at a later stage. With the lens blank 10 that is produced, once a prescription has been determined for a wearer, a prescriber then finishes the back of the lens by standard surfacing steps which include grinding and polishing the back surface to the desired curvature. No further machining is required on the front surface of the lens since the molding process produces for the surface a lens of optical quality. Once the lens is finished to desired power and optical quality, it can then be edged and placed into a frame selected by a user.

Although representative processes and devices have been described in detail herein, those skilled in the art will recognize that various substitutions and modifications may be made without departing from the scope of what is described and defined by the appended claims.

## Claims

1. A method of manufacturing an optical article, comprising:
providing at least one lens blank;
providing a heating apparatus, wherein the heating apparatus comprises a cavity defined by an internal surface, wherein the cavity has a first temperature;
positioning the at least one lens blank inside of the heating apparatus;
substantially entirely sealing the heating apparatus;
annealing the at least one lens blank in the heating apparatus for between 3 hours and 28 hours, wherein the annealing comprises:
adjusting the first temperature to a second temperature for between 1 hour and 8 hours;
heating the at least one lens blank in the heating apparatus for between 1 hour and 12 hours;
adjusting the second temperature to the first temperature for between 1 hour and 8 hours;
unsealing the heating apparatus; and
removing the annealed at least one lens blank from the apparatus.

2. The method of claim 1, wherein the step of providing the at least one lens blank comprises providing at least one polycarbonate lens blank.

3. The method of claim 2, wherein the step of providing the at least one lens blank further comprises providing a lens blank, wherein the lens blank has a substantially equal thickness throughout substantially the entire lens blank.

4. The method of claim 1, wherein the step of adjusting the first temperature further comprises adjusting the temperature from about 30 ºC to about 140 ºC.

5. The method of claim 1, wherein the step of adjusting the second temperature further comprises adjusting the second temperature from about 140 ºC to about 30 ºC.

6. The method of claim 1, wherein the step of heating the lens blank comprises heating the lens blank for about 2 hours.

7. The method of claim 1, wherein the step of positioning the at least one lens blank inside the heating apparatus comprises positioning a plurality of lens blanks in the cavity.

8. The method of claim 7, wherein the at least one lens blank is positioned in a non-contacting relationship with the internal surface of the cavity.

9. The method of claim 8, wherein the annealing process has a duration of 8 hours.

10. The method of claim 1, wherein the optical article is selected from the group comprising: an ophthalmic device, an ophthalmic lens, a finished lens, a semi-finished (SF) lens, and an optical display.

11. The method of claim 9, wherein, following the annealing step, the process further includes at least one of: finishing the lens, applying a hard coat layer to at least a portion of the at least one lens blank, and edging the optical article.

12. An optical article manufactured according to the process of claim 1.

13. An optical article, wherein the optical article comprises:
an annealed semi-finished lens, wherein the annealed semi-finished lens is annealed by a) heating the lens at an increasing temperature from about 30 ºC to about 140 ºC for between 1 and 8 hours; b) heating the lens at about 140 ºC for between 1 hour and 12 hours, and c) heating the lens at a decreasing temperature from about 140 ºC to about 30 ºC for between 1 hour and 8 hours.

14. The optical article of claim 13, wherein the lens is annealed by a) heating the lens at an increasing temperature from about 30 ºC to about 140 ºC for 2 hours; b) heating the lens at about 140 ºC for about 2 hours, and c) heating the lens at a decreasing temperature from about 140 ºC to about 30 ºC for 4 hours.

## Patentansprüche

1. Verfahren zum Herstellen eines optischen Erzeugnisses, das Folgendes umfasst:
Bereitstellen mindestens eines Linsenrohlings;
Bereitstellen einer Heizvorrichtung, wobei die Heizvorrichtung einen Hohlraum aufweist, der durch eine Innenfläche definiert ist, wobei der Hohlraum eine erste Temperatur besitzt;
Anordnen des mindestens einen Linsenrohlings im Inneren der Heizvorrichtung;
im Wesentlichen vollständig Abdichten der Heizvorrichtung;
Tempern des mindestens einen Linsenrohlings in der Heizvorrichtung für 3 Stunden bis 28 Stunden, wobei das Tempern Folgendes umfasst:
Einstellen der ersten Temperatur auf eine zweite Temperatur für 1 Stunde bis 8 Stunden;
Erhitzen des mindestens einen Linsenrohlings in der Heizvorrichtung für 1 Stunde bis 12 Stunden;
Einstellen der zweiten Temperatur auf die erste Temperatur für 1 Stunde bis 8 Stunden;
Öffnen der Heizvorrichtung; und
Entnehmen des getemperten mindestens einen Linsenrohlings aus der Vorrichtung.

2. Verfahren nach Anspruch 1, wobei der Schritt des Bereitstellens des mindestens einen Linsenrohlings das Bereitstellen mindestens eines Polycarbonat-Linsenrohlings umfasst.

3. Verfahren nach Anspruch 2, wobei der Schritt des Bereitstellens des mindestens einen Linsenrohlings ferner das Bereitstellen eines Linsenrohlings umfasst, wobei der Linsenrohling im Wesentlichen über den gesamten Linsenrohling durchgehend eine im Wesentlichen gleiche Dicke aufweist.

4. Verfahren nach Anspruch 1, wobei der Schritt des Einstellens der ersten Temperatur ferner das Einstellen der Temperatur von etwa 30 °C auf etwa 140 °C umfasst.

5. Verfahren nach Anspruch 1, wobei der Schritt des Einstellens der zweiten Temperatur ferner das Einstellen der zweiten Temperatur von etwa 140 °C auf etwa 30 °C umfasst.

6. Verfahren nach Anspruch 1, wobei der Schritt des Erhitzens des Linsenrohlings das Erhitzen des Linsenrohlings für etwa 2 Stunden umfasst.

7. Verfahren nach Anspruch 1, wobei der Schritt des Anordnens des mindestens einen Linsenrohlings im Inneren der Heizvorrichtung das Anordnen mehrerer Linsenrohlinge im Hohlraum umfasst.

8. Verfahren nach Anspruch 7, wobei der mindestens eine Linsenrohling in einer nicht berührenden Relation zur Innenfläche des Hohlraums angeordnet wird.

9. Verfahren nach Anspruch 8, wobei der Temperungsprozess eine Dauer von 8 Stunden aufweist.

10. Verfahren nach Anspruch 1, wobei das optische Erzeugnis aus der Gruppe ausgewählt wird, die Folgendes umfasst: eine augenoptische Einrichtung, eine augenoptische Linse, eine fertige Linse, eine halbfertige Linse (SF-Linse) und eine optische Anzeigeeinrichtung.

11. Verfahren nach Anspruch 9, wobei der auf den Temperungsschritt folgende Prozess ferner mindestens einen der Folgenden enthält: Fertigstellen der Linse, Aufbringen einer Hartbeschichtung zumindest auf einen Abschnitt des mindestens einen Linsenrohlings und Kantenschleifen des optischen Erzeugnisses.

12. Optisches Erzeugnis, das gemäß dem Prozess nach Anspruch 1 hergestellt ist.

13. Optisches Erzeugnis, wobei das optische Erzeugnis Folgendes umfasst:
eine getemperte, halbfertige Linse, wobei die getemperte, halbfertige Linse getempert wird durch a) Erhitzen der Linse bei einer ansteigenden Temperatur von etwa 30 °C auf etwa 140 °C für 1 bis 8 Stunden; b) Erhitzen der Linse bei etwa 140 °C für 1 Stunde bis 12 Stunden und c) Erhitzen der Linse bei einer abnehmenden Temperatur von etwa 140 °C auf etwa 30 °C für 1 Stunde bis 8 Stunden.

14. Optisches Erzeugnis nach Anspruch 13, wobei die Linse getempert wird durch a) Erhitzen der Linse bei einer ansteigenden Temperatur von etwa 30 °C auf etwa 140 °C für 2 Stunden, b) Erhitzen der Linse bei etwa 140 °C für etwa 2 Stunden und c) Erhitzen der Linse bei einer abnehmenden Temperatur von etwa 140 °C auf etwa 30 °C für 4 Stunden.

## Revendications

1. Procédé de fabrication d'un article optique, comprenant :
l'obtention d'au moins une ébauche de lentille ;
l'obtention d'un appareil de chauffage, dans lequel l'appareil de chauffage comprend une cavité définie par une surface interne, dans lequel la cavité a une première température ;
le positionnement de l'au moins une ébauche de lentille à l'intérieur de l'appareil de chauffage ;
le scellement sensiblement complet de l'appareil de chauffage ;
le recuit de l'au moins une ébauche de lentille dans l'appareil de chauffage sur une durée comprise entre 3 heures et 28 heures, dans lequel le recuit comprend :
l'ajustement de la première température à une deuxième température sur une durée comprise entre 1 heure et 8 heures ;
le chauffage de l'au moins une ébauche de lentille dans l'appareil de chauffage sur une durée comprise entre 1 heure et 12 heures ;
l'ajustement de la deuxième température à la première température sur une durée comprise entre 1 heure et 8 heures ;
le descellement de l'appareil de chauffage ; et
le retrait de l'au moins une ébauche de lentille recuite de l'appareil.

2. Procédé selon la revendication 1, dans lequel l'étape d'obtention de l'au moins une ébauche de lentille comprend l'obtention d'au moins une ébauche de lentille en polycarbonate.

3. Procédé selon la revendication 2, dans lequel l'étape d'obtention de l'au moins une ébauche de lentille comprend en outre l'obtention d'une ébauche de lentille, dans lequel l'ébauche de lentille a une épaisseur sensiblement égale sur la quasi-totalité de l'ébauche de lentille.

4. Procédé selon la revendication 1, dans lequel l'étape d'ajustement de la première température comprend en outre l'ajustement de la température d'environ 30 °C à environ 140 °C.

5. Procédé selon la revendication 1, dans lequel l'étape d'ajustement de la deuxième température comprend en outre l'ajustement de la deuxième température d'environ 140 °C à environ 30 °C.

6. Procédé selon la revendication 1, dans lequel l'étape de chauffage de l'ébauche de lentille comprend le chauffage de l'ébauche de lentille pendant environ 2 heures.

7. Procédé selon la revendication 1, dans lequel l'étape de positionnement de l'au moins une ébauche de lentille à l'intérieur de l'appareil de chauffage comprend le positionnement d'une pluralité d'ébauches de lentille dans la cavité.

8. Procédé selon la revendication 7, dans lequel l'au moins une ébauche de lentille est positionnée dans une relation sans contact avec la surface interne de la cavité.

9. Procédé selon la revendication 8, dans lequel le processus de recuit a une durée de 8 heures.

10. Procédé selon la revendication 1, dans lequel l'article optique est choisi dans le groupe comprenant : un dispositif ophtalmique, une lentille ophtalmique, une lentille finie, une lentille semi-finie (SF), et un afficheur optique.

11. Procédé selon la revendication 9 dans lequel, après l'étape de recuit, le procédé comporte en outre au moins une des opérations suivantes : finition de la lentille, application d'une couche de revêtement dur sur au moins une partie de l'au moins une ébauche de lentille, et débordage de l'article optique.

12. Article optique fabriqué selon le procédé de la revendication 1.

13. Article optique, dans lequel l'article optique comprend :
une lentille semi-finie recuite, dans lequel la lentille semi-finie recuite est recuite par a) chauffage de la lentille à une température croissante d'environ 30 °C à environ 140 °C sur une durée comprise entre 1 heure et 8 heures ; b) chauffage de la lentille à environ 140 °C sur une durée comprise entre 1 heure et 12 heures ; et c) chauffage de la lentille à une température décroissante d'environ 140 °C à environ 30 °C sur une durée comprise entre 1 heure et 8 heures.

14. Article optique selon la revendication 13, dans lequel la lentille est recuite par a) chauffage de la lentille à une température croissante d'environ 30 °C à environ 140 °C pendant 2 heures ; b) chauffage de la lentille à environ 140 °C pendant environ 2 heures ; et c) chauffage de la lentille à une température décroissante d'environ 140 °C à environ 30 °C pendant 4 heures.
